# EUROPEAN PATENT SPECIFICATION

(11) **EP 2 514 554 B1**
(45) Date of publication and mention of the grant of the patent: **23.03.2016**
(21) Application number: 12164527.9
(22) Date of filing: 18.04.2012
(51) Int. Cl.: B23K 26/073, B23K 26/14, B23K 26/20, B23K 26/06, B23K 26/34

(54) **Heat source for material processing with a laser source and an optical element for laser beam intensity distribution ; Method of providing heat in a laser deposition apparatus**
Wärmquelle zum Materialbearbeitung mit einer Laserquelle und einem optischen Element für die Verteilung der Laserstrahlintensität ; Verfahren zum Bringen Wärme in einer Laserauftragvorrichtung
Source de chaleur pour l'usinage de matériau avec une source laser et un élément optique pour la distribution d'intensité du faisceau laser ; Méthode d'apport de chaleur dans un appareil de déposition laser

(30) Priority: 20.04.2011 GB 201106623
(43) Date of publication of application: 24.10.2012
(73) Proprietor: Rolls-Royce plc, London SW1E 6AT (GB)
(72) Inventor: Clark, Daniel, Derby, Derbyshire DE56 1TG (GB); Kell, James, Nottingham, Nottinghamshire NG7 1AA (GB); Allen, Jeffrey, Derby, Derbyshire DE23 3RJ (GB)
(74) Representative: Rolls-Royce plc

(56) References cited:
- JP-A- 8 243 769
- JP-U- H0 336 377
- US-A- 3 870 232
- US-A- 5 438 441
- US-A1- 2006 000 812

## Description

This invention concerns a heat source for a laser disposition apparatus and a method of providing heat in a laser disposition apparatus according to the preamble of claims 1 and 11 (see, for example, US 2006/000 812 A1), with controlling the beam intensity distribution of a laser light source. It is particularly, though not exclusively, suited for controlling beam intensity distribution in processes such as direct laser deposition (DLD), multi-pass welding, cladding or hardfacing in which a laser is used as a heat source.

A laser cladding apparatus typically comprises a laser which forms a molten pool on a substrate into which a stream of metal powder entrained in a gas can be blown. This results in a track (otherwise known as a clad) being deposited on the substrate. US 6,316,744 discloses a laser cladding apparatus in which the metal powder is delivered coaxially with, and around, the laser beam.

The intensity of the laser beam usually has a Gaussian distribution which means that the centre of the melt pool is at a significantly higher temperature than the temperature of the surrounding areas. If it is necessary to deposit a relatively wide coating then this must be done by overlapping a series of clads side-by-side. If only the laser beam diameter is increased then the temperature at the centre of the melt pool is such that high levels of vaporisation of additive material may occur, or the substrate may melt to an excessive depth. Further, the surrounding substrate material may be disrupted to an excessive depth and the deposited coating may dilute into the substrate. With thin substrates, it is even possible that the substrate will be penetrated, which may jeopardise the integrity of the component. If a number of clads are overlapped side-by-side then the reworking of previously deposited clads can induce unwanted material properties. Further, cavities may form between adjacent clads which is undesirable, and the surface formed may be uneven.

In practice the energy distribution of a laser beam can be skewed or distorted by various factors, including the laser alignment and configuration. This type of distortion is highly undesirable. There exist known means for reducing this skewing and distortion to create a more regular and symmetrical energy distribution.

Examples of such known means include beam splitting devices, which may divert energy in a continuous or a discrete manner. A limitation of such devices is that they tend to divide the beam so it impinges on the substrate in discrete spots. Multiple spot and multiple beam systems are known, respectively using single or multiple sources. Systems with multiple independent heat sources (i.e. more than one laser) can have problems with the depth of field. This is because in directing spots to be clustered at a particular spacing, at a given focal plane, there can be a variation due to the beam angle should the substrate surface be above or below this focal plane.

The majority of laser cladding and DLD operations use a conventional Gaussian beam distribution. When covering large areas, a significant amount of overlapping has to be employed, and the domed nature of the clad tends to result in grooves at the overlap positions. For many applications, this is not acceptable, requiring additional machining operations. The cost of these additional operations can make the process uneconomic.

In practice, deposition is almost always performed on uneven substrates; this is particularly so when overlapping the initial pass and on subsequent passes. Consequently, the substrate temperature and thermal cross section vary with position in the build cycle and across the deposition track. For example, in overlapping the previous bead, the bead will typically still retain some thermal mass relative to the base layer, while also presenting more mass to be raised to the melting temperature to ensure fusion. This imbalance of heat input requirements across the bead section, i.e. transverse to the axis of beam travel, leads to inefficiency and so the power input requirement is higher than the optimum.

Beam absorption efficiency varies with temperature in a non-linear manner. When the beam strikes the substrate, a proportion of the incident photons will be absorbed and the rest reflected. The higher the temperature of the material, the greater the proportion of photons absorbed. The efficient operation of the process therefore depends strongly on achieving high enough material temperatures.

With a round Gaussian or other regular and symmetrical energy input distribution, energy is therefore lost by reflection before the optimum temperature for absorption is attained, close to peak intensity. Thereafter, further energy absorption varies with the unregulated substrate temperature, which heats at varying rates due to the interaction time at various points under the beam illumination. This varying and excessive heating is wasteful, affecting the amount of residual heat input into the substrate, which may disrupt the parent or induce thermal strains. Furthermore, the waste energy affects the effective size of the processing zone which can be maintained, and the rate of progression of the processing zone which can be sustained, for a given beam input energy. A smaller than optimum processing zone, which may be travelling slower, clearly affects production efficiency and economics.

Similarly, to ensure sufficient fusion with an overlapped bead, an appropriate degree of overlap (typically from 10-30%) must be selected. The size of the overlap affects the degree of material remelting and the volumetric fill rate. The volume of material which is remelted, and the number of remelts, together with the number and scale of reheating events from nearby passes, all affect the energy consumption per kilogram of consolidated material. This embodied energy affects distortion, stress, microstructure, intermediate (interpass) temperature and ultimately the environmental cost of processing.

Previous work has been directed towards achieving an even distribution of energy intensity; that is, to achieve thermal uniformity across the beam. It is also known to use different beam shapes, so that the impingement profile of the beam on the substrate is, for example, square or elongated. However, these variations do not fully address the problems outlined above.

According to the invention there is provided a heat source for a laser deposition apparatus as set out in claim 1, a laser deposition apparatus comprising such a heat source (see claim 8), and a method of providing heat in a laser diposition apparatus according to claim 11.

Embodiments of the invention will now be described, by way of example, with reference to the accompanying drawings in which:
Figure 1 is a schematic representation of an apparatus for material deposition including a heat source according to the invention;
Figure 2 is an example of a beam intensity distribution of a heat source;
Figure 3 is an example of a beam intensity distribution according to the present invention;
Figure 4 is a second example of a beam intensity distribution according to the present invention;
Figure 5 is a third example of a beam intensity distribution according to the present invention;
Figure 6 schematically shows a cross-sectional view of a spray nozzle for a material deposition process;
Figure 7 schematically shows an end view of the spray nozzle of Figure 6; and
Figure 8 schematically shows an end view of an alternative embodiment of a spray nozzle.

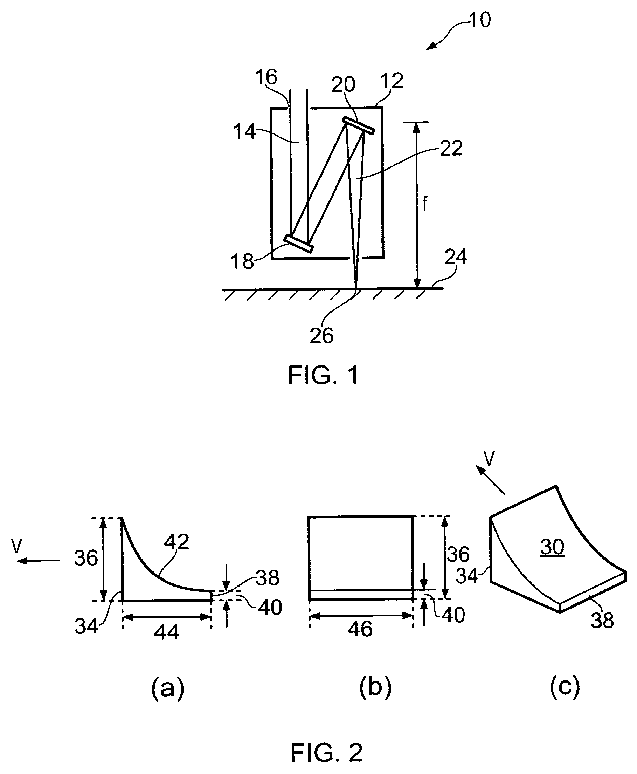

Referring first to Figure 1, a beam shaping apparatus is shown generally at 10, surrounded by an enclosure 12. A raw laser beam 14 enters the enclosure 12 through an aperture 16, from a source (not shown) of laser light. The beam 14 is reflected from a plane mirror 18 so that it strikes a diffractive optical element 20. The diffractive optical element shapes the beam, as will presently be explained, to form the desired beam shape and intensity distribution. The shaped beam 22 is directed from the diffractive optical element to strike the workpiece 24 at a focal point 26. The focal point is at a focal distance f from the diffractive optical element.

Figure 2 shows an example of a beam intensity distribution 30. Figure 2(a) and Figure 2(b) are orthographic side and rear views, and Figure 2(c) is an isometric view, of the beam intensity distribution of a shaped laser beam 22 produced by a diffractive optical element 20. The beam traverses the substrate at a velocity V, as indicated by the arrow in Figure 2(a) and Figure 2(c). The shaped laser beam has a length 44 (in the direction of V) and a width 46 (perpendicular to V). The length 44 may be defined as f.V, where f is the laser frequency; the width 46 is typically of the order of 4mm. The vertical axis in each drawing indicates the relative intensity of the laser beam.

At the leading edge 34 of the shaped laser beam, the intensity 36 of the beam is relatively high. In contrast, at the trailing edge 38 the intensity 40 is relatively low - in this example, the intensity 40 at the trailing edge 38 is only 15% of the intensity 36 at the leading edge 34. The intensity of the beam at intermediate points between the leading and trailing edges is defined by a parabolic curve 42, as shown. It will be observed that, in this example, the intensity of the beam varies along the length 44 of the beam, but is constant across the width 46 of the beam, from one transverse edge to the other, for any given longitudinal position.

The shape of the beam intensity distribution is calculated to maximise the energy absorption by the material in those locations in which the heat will do the most useful work in terms of fusion and pool shaping.

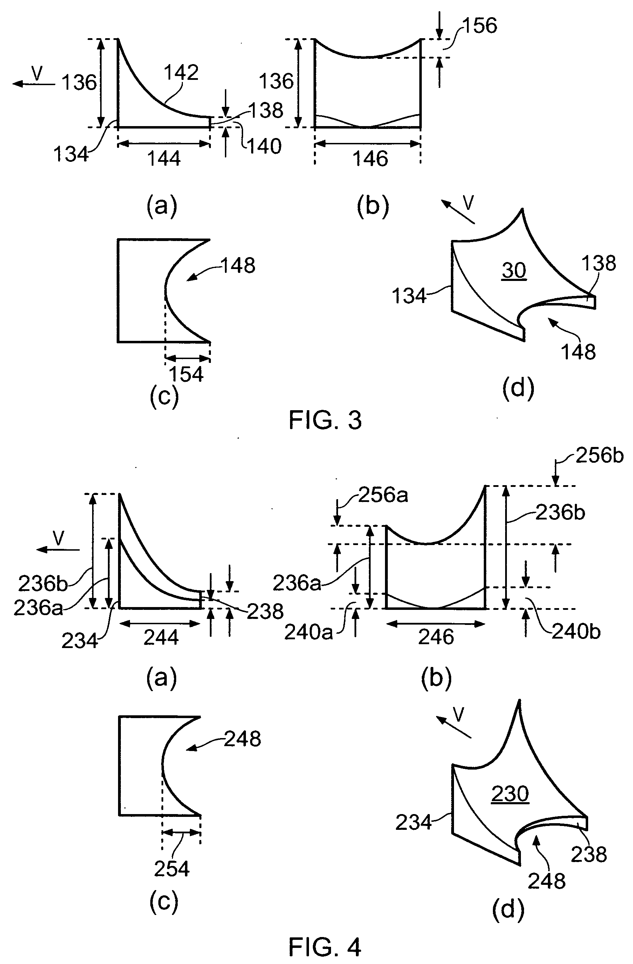

Figure 3 shows a beam intensity distribution 130 according to the invention. Figures 3(a) to 3(c) are orthographic side, rear and top views, and Figure 3(d) an isometric view, of the beam intensity distribution of a shaped laser beam 22 produced by a diffractive optical element 20.

The beam traverses the substrate at a velocity V, as indicated by the arrow in Figure 3(a) and Figure 3(d). The shaped laser beam has a length 144 (in the direction of V), defined by f.V, as in Figure 2, and a width 146 (perpendicular to V) typically of the order of 4mm.The vertical axis in Figures 3(a), 3(b) and 3(d) indicates the relative intensity of the laser beam.

Referring to Figures 3(a) and 3(d), it can be seen that in this example, as in that of Figure 2, the intensity 140 at the trailing edge 138 is only 15% of the maximum intensity 136 at the leading edge 134. The intensity of the beam at intermediate points between the leading and trailing edges is defined by a parabolic curve 142, as shown. Referring to Figures 3(b) and 3(d), it will be observed that the intensity of the beam in the centre of the leading edge 134 is less than the intensity at its transverse edges. In this embodiment, the reduction in intensity 156 is 20%. The intensity profile across the width of the leading edge defines a parabolic curve. Likewise, the intensity of the beam across the width of the trailing edge 138 defines a parabolic curve, with intensity 140 at the edges and zero in the centre. At intermediate points between the leading and trailing edges, the intensity of the beam in the centre is likewise less than the intensity at the edges.

Referring to Figures 3(c) and 3(d), the trailing edge 138 of the beam defines a parabolic cutback 148. At its centre, the trailing edge 138 is cut back by a distance 154, which in this embodiment is equal to f.V/2.

The shape of the beam intensity distribution is calculated to regulate most efficiently the temperature distribution resulting from the absorption of laser energy by the material. In particular, in this embodiment more energy will be directed to the edges of the beam and less to the centre, at a given longitudinal position. This addresses the problem noted above, that with a Gaussian distribution the temperature in the centre is higher than at the edges.

Figure 4 illustrates a further alternative embodiment of the invention. Figures 4(a) to 4(c) are orthographic side, rear and top views, and Figure 4(d) an isometric view, of the beam intensity distribution 230 of a shaped laser beam 22 produced by a diffractive optical element 20.

The beam traverses the substrate at a velocity V, as indicated by the arrow in Figure 4(a) and Figure 4(d). The shaped laser beam has a length 244 (in the direction of V), defined by f.V, as in Figures 2 and 3, and a width 246 (perpendicular to V) typically of the order of 4mm.The vertical axis in Figures 3(a), 3(b) and 3(d) indicates the relative intensity of the laser beam.

Referring to Figures 4(a) and (b), it can be seen that the intensity of the beam across the width of the leading edge 234 describes a parabolic curve, as in Figure 3. However, the intensity 236b of the beam at one transverse edge is higher than the intensity 236a of the beam at the other transverse edge. In this embodiment, the intensity 236a of the beam at the left-hand transverse edge (viewed in the direction of V) is 80% of the intensity 236b of the beam at the right-hand transverse edge. Considering the point at the centre of the leading edge 234, where the intensity of the beam is at a minimum, this represents a reduction in intensity 256a of 25% compared with the intensity 236a at the left-hand edge, or a reduction 256b of 40% compared with the intensity 236b at the right-hand edge.

Referring to Figure 4(b), it can also be seen that the intensity of the beam at the trailing edge 238 describes a parabolic curve. The intensity 240a at the left-hand edge is 15% of the maximum intensity 236b at the leading edge, and the intensity at the right-hand edge is 20% of the maximum intensity 236b. The intensity falls to zero at the centre of the trailing edge 238. At intermediate points between the leading and trailing edges, the intensity of the beam in the centre is likewise less than the intensity at the edges, and at any point the intensity at the right-hand transverse edge is higher than the intensity at the left-hand transverse edge.

Referring to Figures 4(c) and 4(d), the trailing edge 138 of the beam defines a parabolic cutback 248. At its centre, the trailing edge 238 is cut back by a distance 254, which in this embodiment is equal to f.V/2.

The shape of the beam intensity distribution is calculated to regulate most efficiently the temperature distribution resulting from the absorption of laser energy by the material. In particular, in this embodiment more energy will be directed to the edges of the beam and less to the centre, at a given longitudinal position; and more energy will be directed to the right-hand edge (viewed in the direction of V) than to the left-hand edge. This further improves the distribution of the Figure 3 embodiment, and the difference in beam intensity between the left and right edges compensates for the residual heat in the overlapped region.

As explained above, in a cladding or DLD application, in particular, the fill regime involves overlapping. This affects the orientation of the substrate to the beam and the thermal section across the width of the beam. With a sustained build there is a residual temperature rise in the material due to the degree of heat flux permissible by the thermal conductivity, the changing thermal section and the rate of heat input. In conventional arrangements, for example those using multiple converging beams, this can be difficult to manage, in particular because of the variation in height across the profile of the weld area. The single-beam source of the invention offers a simple solution, optimising the intensity distribution in a compact manner (relative to the pool) so that heat input can be kept to a minimum for the maximum rate of clad or powder capture. This minimised heat input can help to keep the amount of heated material low relative to the bulk for a given time, and this aspect is helpful in reducing distortion. Similarly the depth of the affected zone, termed the depth of fusion (or the dilution layer in cladding terminology), can be kept shallow.

The precise shape of the optimal beam intensity distribution will vary from application to application, depending on the particular parameters of the operation being performed. Some examples of factors that may be taken into consideration are:
the toolpath overlapping geometry;
distance in x, z and corner slope consistency;
the relationship between beam power, wavelength and traverse velocity V;
the substrate's cross-section (for example, features such as edges, infilling, two sided overlaps, corners, single pass walls, overhanging features, re-entrant features);
the substrate's physical properties, such as specific heat, conductivity and thermal distribution.

The device used to create the tailored optical intensity distribution is preferably a Holographic Optical Element (HOE). HOEs may be of the reflective or transmissive type, and may operate by diffraction or by refraction. The methods by which such devices may be made will be understood by the skilled reader, and do not form part of the claimed invention.

Alternatively, the tailored optical intensity distribution may be created using other known methods of beam manipulation, such as conventional optics, kaleidoscopic optics or a spatial light modulator.

An apparatus, such as that shown in Figure 1, may include a number of different optical elements arranged in a carousel or similar arrangement, so that in use different optical elements may be individually selected and brought into the beam path. In this way, the beam distribution may be easily changed to provide the desired deposition conditions.

It may be desirable to be able to change the traverse direction of the beam over the substrate during a processing operation. To facilitate this, the optical element may be rotatably mounted so that the beam can be "steered" as the traverse direction changes, ensuring that the intensity distribution remains correctly oriented with respect to the traverse direction.

It will be appreciated that, if a steerable beam is used in this way, the intensity distribution will be different when the traverse direction is following a curved path, because the radially inner side of the path will describe a shorter arc than the radially outer side. Consequently, with a beam intensity distribution as shown in Figures 2 to 4, the beam intensity will be disproportionately high at the radially inner edge and disproportionately low at the radially outer edge.

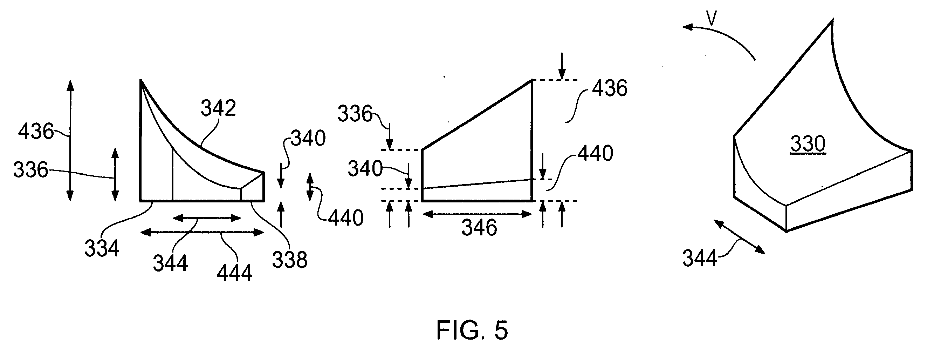

To overcome this limitation, an alternative beam intensity distribution may be employed, an example of which is illustrated in Figure 5. This embodiment is suitable for a particular leftward, or anti-clockwise, curving traverse direction, but it will be understood that the principles may be applied similarly to other curved paths.

Figure 5 shows an example of a beam intensity distribution 330 according to the invention. Figure 5(a) and Figure 5(b) are orthographic side and rear views, and Figure 5(c) is an isometric view, of the beam intensity distribution of a shaped laser beam 22 produced by a diffractive optical element 20. The beam traverses the substrate at a velocity V, as indicated by the arrow in Figure 2(c). In contrast to the embodiments of Figures 2 to 4, in Figure 5 the velocity V defines a curved path. The shaped laser beam has a length 344 at its radially inner side and 444 at its radially outer side. It will be noted that the length 344 is less than the length 444, because the inner edge of the curved path will describe a shorter arc than the outer edge, for a given angular displacement. The beam has a width 346 (perpendicular to V), which is typically of the order of 4mm. The vertical axis in each drawing indicates the relative intensity of the laser beam.

At the leading edge 334 of the shaped laser beam, the intensity of the beam is 336 at the radially inner edge and 436 at the radially outer edge. The intensity 436 at the radially outer edge is higher than the intensity 336 at the radially inner edge, reflecting the longer path described by the outer edge of a curved path. Similarly, at the trailing edge 338 the intensity 340 at the radially inner edge is less than the intensity 440 at the radially outer edge. As in the embodiment shown in Figure 2, the intensity of the beam at its trailing edge 338 is less than the corresponding intensity at the leading edge 438 for any given transverse position. The intensity of the beam at intermediate points between the leading and trailing edges is defined by a parabolic curve 342, as shown. This beam intensity distribution compensates for a curved traverse direction by providing less energy to the radially inner part of the path and more to the outer, so that the energy input, per unit area, into the substrate, for all transverse positions across the beam, is maintained at the same level as for a straight traverse direction.

As well as ensuring that the beam intensity distribution is controlled to provide the desired distribution of energy input into the substrate, in order to produce a uniform clad on the substrate it would be desirable to control the quantity of powder delivered into the melt pool across the beam width. This is particularly important where the beam is following a curved path, because if the powder delivery is uniform across the width of the beam there will either be too much powder at the radially inner end or too little at the radially outer end.

Accordingly, it would be desirable to combine the teaching of this patent with an arrangement to provide a non-uniform delivery of powder to the melt pool. European patent applications EP10195045.9 and EP10195048.3 describe two such arrangements.

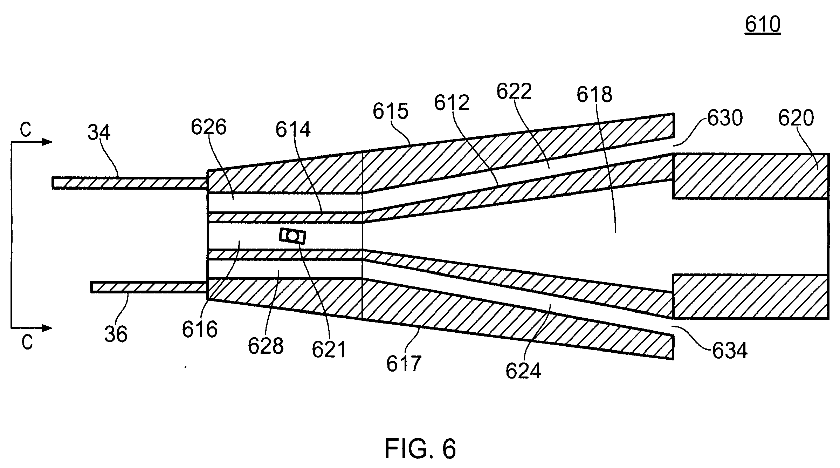

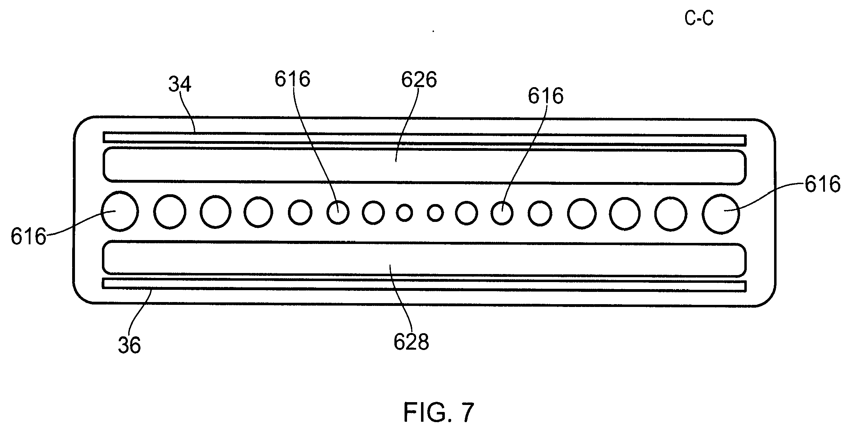

Figures 6 and 7 show an embodiment of a spray nozzle 610 which can be used in conjunction with a heat source according to the invention. An array of nozzle apertures 616 are formed in the nozzle body 614 and are arranged side-by-side in a line with the centres of the apertures 616 all lying on the same line. The plurality of nozzle apertures 616 that constitute the array are of varying sizes. In the embodiment shown, the nozzle aperture 616 at each end of the array is the largest and the nozzle apertures gradually decrease in size towards the middle of the array. Each of the nozzle apertures 616 is provided with an individual flow regulator in the form of a valve 621. The valve 621 can be controlled to alter the flow rate through the specific nozzle 616.

Upper and lower outer walls 615, 617 are spaced from the chamber body 612 and the nozzle body 614 and define upper and lower fluid ducts 622, 624 between the walls 615, 617 and the chamber/nozzle body 612, 614. The upper and lower fluid ducts 622, 624 have upper and lower inlets 630, 632 respectively for introducing a gas into the ducts 622, 624. The upper and lower outer walls 615, 617 also define an upper elongate gas aperture 626 above the array of nozzle apertures 616 and a lower elongate gas aperture 628 below the array of nozzle apertures 616. The upper and lower elongate gas apertures 626, 628 are parallel to the array of nozzle apertures 616. When a gas is supplied to the ducts 622, 624 via the inlets 630, 632 the gas is discharged from the upper and lower elongate gas apertures 626, 628 as sheets. A chamber body 612 is provided which defines a powder supply chamber 618. The chamber body 612 is attached to the nozzle body 614 such that the powder supply chamber 618 is in fluid communication with the plurality of nozzle apertures 616. A supply duct 620 is attached to the chamber body 612 and in use delivers a powder to the powder chamber 618 so as to eject a wide powder sheet from the array of nozzle apertures 616.

The spray nozzle 610 can be used, in conjunction with a beam shaping apparatus as described above, in a laser deposition apparatus for depositing a coating on the surface of a substrate. In use, metal powder is fed to the powder supply chamber 618 through the supply duct 620 using a carrier gas. A carrier gas is also supplied to the upper and lower fluid ducts 622, 624 through the inlets 630, 632. The metal powder is mixed in the powder supply chamber 618 and is caused to exit the array of nozzle apertures 616 as a wide sheet of powder. The carrier gas exits the upper and lower elongate gas apertures 626, 628 as wide streams of gas sandwiching the powder sheet. The Coandǎ effect causes the streams of carrier gas to be attracted to the powder sheet ejected from the array of nozzle apertures 616 and helps to ensure that the powder is ejected from the array of nozzle apertures 616 as a sheet, the gas-entrained powder issuing as an uninterrupted lamellar flow. This ensures that a coating of an even thickness is deposited on the substrate and helps to prevent the powder sheet from diverging. Consequently the powder coating is improved, because the bulk of the powder lands in the melt pool on the substrate surface, without excess overspray.

The individual valves 621 can regulate the flow through the individual nozzle apertures. This is particularly useful if the spray nozzle 610 is performing a relatively tight arc in the plane of the substrate surface. The nozzle apertures 616 towards the radially inner side of the arc, which are travelling relatively slowly, are choked to reduce the flow rate of powder exiting the nozzle apertures when compared to the flow rate of powder exiting the nozzle apertures on the radially outer side of the arc, which are travelling relatively fast. This helps to ensure that the thickness of the coating is substantially even.

In conjunction with a suitable beam intensity distribution, such as that shown in Figure 5, the melting and fusion of the clad will be optimised, even for curved deposition paths.

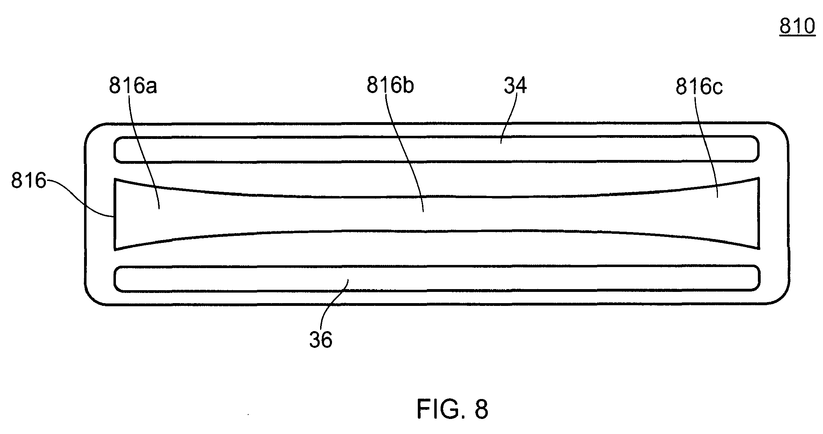

Figure 8 shows an alternative embodiment of a spray nozzle 810. The nozzle aperture 816 has first end portion 816a, a second end portion 816c and a central portion 816b. The first and second end portions 816a, 816c are located either side of the central portion 816b and in this embodiment the heights of the first and second end portions 816a, 816c are greater than that of the central portion 816b. The nozzle aperture 816 gradually reduces in height from either end towards the centre. The nozzle 810 provides an alternative to the nozzle 610, with a single nozzle aperture 816 instead of the plurality of nozzle apertures 616 in Figures 6 and 7. As in that embodiment, the flow of powder may be controlled either by changing the shape of the nozzle aperture 816 or by valves or similar control means within the nozzle 810.

By combining a controllable spray nozzle, as described above, with a heat source according to the invention incorporating a beam intensity distribution as described previously, it is therefore possible to achieve a substantial improvement in the quality of cladding in material deposition processes. The control of the beam intensity distribution ensures that the heating of the melt pool is optimised, and simultaneously the controllable spray nozzle delivers exactly the quantity of powder need to produce a uniform clad.

## Claims

1. A heat source for a laser deposition apparatus, comprising a source of laser light (14), an optical element (20) to modulate the laser light to provide a beam (22), means for traversing the beam over a substrate (24) in use in a predetermined direction (V), the beam having a leading edge (34) and a trailing edge (38) defined with reference to the traverse direction and having transverse edges joining the leading and trailing edges, the intensity distribution of the beam (30) over its cross-sectional area being defined to provide a desired temperature distribution in use in the substrate **characterised in that** the optical element is so modulating the laser light to provide a beam having the defined intensity distribution, that the beam intensity is higher at the transverse edges of the beam than in the centre of the beam, at a given position between the leading and trailing edges.

2. A heat source as claimed in claim 1, in which the optical element is a diffractive or refractive or holographic optical element.

3. A heat source as claimed in claim 1 or claim 2, in which the beam intensity is higher at the leading edge of the beam than at the trailing edge of the beam, at a given transverse position.

4. A heat source as claimed in any preceding claim, in which the beam intensity is higher at one transverse edge than at the other, at a given position between the leading and trailing edges.

5. A heat source as claimed in any preceding claim, in which the material processing operation is direct laser deposition, multi-pass welding, cladding or hardfacing.

6. A heat source as claimed in any preceding claim, and comprising a plurality of optical elements that can be individually selected in use to provide a plurality of predetermined optical intensity distributions.

7. A heat source as claimed in any preceding claim, in which the traverse direction changes during the material processing operation and in which the optical element is rotatably mounted so that the beam intensity distribution can be kept correctly oriented with respect to the traverse direction throughout the operation.

8. A laser deposition apparatus comprising a heat source as claimed in any preceding claim, and further comprising a powder spray nozzle arranged so as to produce a wide powder stream in use.

9. A laser deposition apparatus as claimed in claim 8, in which the powder spray nozzle has an array of nozzle apertures arranged side-by-side.

10. A laser deposition apparatus as claimed in claim 9, and in which at least one nozzle aperture within the array is provided with a flow regulator for regulating the flow of powder through the said nozzle.

11. A method of providing heat in a laser deposition apparatus, the method comprising the following steps:
providing a source of laser light (14);
providing an optical element (20) to modulate the laser light to provide a beam (22);
providing means for traversing the beam over a substrate (24) in use in a predetermined direction (V), the beam having a leading edge (34) and a trailing edge (38) defined with reference to the traverse direction and
having transverse edges joining the leading and trailing edges, the intensity distribution of the beam (30) over its cross-sectional area being defined to provide a desired temperature distribution in use in the substrate;
the method **characterised by** modulating the laser light with the optical element to provide a beam having the defined intensity distribution such that the beam intensity is higher at the transverse edges of the beam than in the centre of the beam, at a given position between the leading and trailing edges.

## Patentansprüche

1. Wärmequelle für eine Laserauftragsvorrichtung, umfassend eine Laserlichtquelle (14), ein optisches Element (20), um das Laserlicht zu modulieren, um einen Strahl (22) bereitzustellen, Mittel zum Verfahren des Strahls bei Verwendung über ein Substrat (24) in einer vorherbestimmten Richtung (V), wobei der Strahl eine vordere Kante (34) und eine hintere Kante (38) aufweist, die in Bezug auf die Verfahrrichtung definiert sind, und transversale Kanten aufweist, die die vordere und die hintere Kante miteinander verbinden, wobei die Intensitätsverteilung des Strahls (30) über seine Querschnittsfläche definiert ist, um bei Verwendung im Substrat eine gewünschte Temperaturverteilung bereitzustellen, **dadurch gekennzeichnet, dass** das optische Element das Laserlicht so moduliert, dass ein Strahl bereitgestellt wird, der die definierte Intensitätsverteilung aufweist, so dass die Intensität des Strahls in einer vorgegebenen Position zwischen der vorderen und der hinteren Kante an den transversalen Kanten des Strahls höher ist als im Zentrum des Strahls.

2. Wärmequelle nach Anspruch 1, wobei das optische Element ein diffraktives oder refraktives oder holographisches optisches Element ist.

3. Wärmequelle nach Anspruch 1 oder Anspruch 2, wobei die Intensität des Strahls in einer vorgegebenen transversalen Position an der vorderen Kante des Strahls höher ist als an der hinteren Kante des Strahls.

4. Wärmequelle nach einem der vorstehenden Ansprüche, wobei die Intensität des Strahls in einer vorgegebenen Position zwischen der vorderen Kante und der hinteren Kante an einer transversalen Kante höher ist als an der anderen.

5. Wärmequelle nach einem der vorstehenden Ansprüche, wobei das Materialbearbeitungsverfahren direkter Laserauftrag, Mehrlagenschweißen, Plattieren oder Auftragsschweißen ist.

6. Wärmequelle nach einem der vorstehenden Ansprüche und umfassend eine Vielzahl optischer Elemente, die bei der Verwendung einzeln ausgewählt werden können, um eine Vielzahl vorherbestimmter optischer Intensitätsverteilungen bereitzustellen.

7. Wärmequelle nach einem der vorstehenden Ansprüche, wobei sich die Verfahrrichtung während des Materialbearbeitungsvorgangs ändert und wobei das optische Element drehbar angebracht ist, so dass die Intensitätsverteilung des Strahls während des gesamten Vorgangs in Bezug auf die Verfahrrichtung korrekt orientiert gehalten werden kann.

8. Laserauftragsvorrichtung, umfassend eine Wärmequelle nach einem der vorstehenden Ansprüche und weiter umfassend eine Pulversprühdüse, die so angeordnet ist, dass sie bei der Verwendung einen breiten Pulverfluss erzeugt.

9. Laserauftragsvorrichtung nach Anspruch 8, wobei die Pulversprühdüse eine Reihe von Düsenöffnungen aufweist, die nebeneinander angeordnet sind.

10. Laserauftragsvorrichtung nach Anspruch 9, wobei mindestens eine Düsenöffnung innerhalb der Reihe mit einem Durchflussregler versehen ist, um den Durchfluss des Pulvers durch die Düse zu regeln.

11. Verfahren der Bereitstellung von Wärme in einer Laserauftragsvoruchtung, wobei das Verfahren die folgenden Schritte umfasst:
Bereitstellen einer Laserlichtquelle (14);
Bereitstellen eines optischen Elementes (20), um das Laserlicht zu modulieren, um einen Strahl (22) bereitzustellen;
Bereitstellen von Mitteln zum Verfahren des Strahls bei Verwendung über ein Substrat (24) in einer vorherbestimmten Richtung (V), wobei der Strahl eine vordere Kante (34) und eine hintere Kante (38) aufweist, die in Bezug auf die Verfahrrichtung definiert sind, und transversale Kanten aufweist, die die vordere und die hintere Kante miteinander verbinden, wobei die Intensitätsverteilung des Strahls (30) über seine Querschnittsfläche definiert ist, um bei Verwendung im Substrat eine gewünschte Temperaturverteilung bereitzustellen;
wobei das Verfahren **dadurch gekennzeichnet ist, dass** das Laserlicht mit dem optischen Element, um einen Strahl bereitzustellen, der die definierte Intensitätsverteilung aufweist, so moduliert wird, dass die Intensität des Strahls in einer vorgegebenen Position zwischen der vorderen und der hinteren Kante an den transversalen Kanten des Strahls höher ist als im Zentrum des Strahls.

## Revendications

1. Source de chaleur pour appareil de dépôt laser, comprenant une source de lumière laser (14), un élément optique (20) pour moduler la lumière laser afin de produire un faisceau (22), des moyens pour traverser le faisceau au-dessus d'un substrat (24) utilisé dans une direction prédéterminée (V), le faisceau ayant un bord d'attaque (34) et un bord de fuite (38) définis en référence à la direction transversale et ayant des bords transversaux rejoignant les bords d'attaque et de fuite, la répartition de l'intensité du faisceau (30) sur sa surface de section transversale étant définie pour fournir une distribution de température souhaitée à utiliser dans le substrat, **caractérisée en ce que** l'élément optique puisse ainsi moduler la lumière laser de manière à produire un faisceau présentant la distribution d'intensité définie, pour que l'intensité du faisceau soit plus élevée au niveau des bords transversaux du faisceau qu'au centre dudit faisceau, à une position donnée entre les bords d'attaque et de fuite.

2. Source de chaleur selon la revendication 1, où l'élément optique est un élément optique diffractif ou réfractif ou holographique.

3. Source de chaleur selon la revendication 1 ou la revendication 2, où l'intensité du faisceau est plus élevée au bord d'attaque du faisceau qu'au bord de fuite du faisceau, à une position transversale donnée.

4. Source de chaleur selon l'une quelconque des revendications précédentes, où l'intensité du faisceau est plus élevée au niveau d'un bord transversal du faisceau qu'à un autre, à une position donnée entre les bords d'attaque et de fuite.

5. Source de chaleur selon l'une quelconque des revendications précédentes, où l'opération du traitement des matériaux consiste en dépôt laser, soudage multipasse, bardage et surfaçage de renfort.

6. Source de chaleur selon l'une quelconque des revendications précédentes, et comportant une pluralité d'éléments optiques pouvant être sélectionnés individuellement en service pour fournir une pluralité de distributions d'intensité optique prédéterminées.

7. Source de chaleur selon l'une quelconque des revendications précédentes, où la direction transversale change au cours de l'opération de traitement des matériaux et où l'élément optique est monté en rotation pour maintenir la distribution d'intensité de faisceau correctement orientée par rapport à la direction transversale pendant toute l'opération.

8. Appareil de dépôt laser comprenant une source de chaleur selon l'une quelconque des revendications précédentes, et comprenant en outre une buse de pulvérisation de poudre disposée de manière à produire un large flux de poudre en service.

9. Appareil de dépôt laser selon la revendication 8, où la buse de pulvérisation de poudre comporte un ensemble d'ouvertures de buses disposées côte à côte.

10. Appareil de dépôt laser selon la revendication 9, et où au moins une ouverture de buse dans l'ensemble est pourvue d'un régulateur de débit pour réguler le flux de poudre par l'intermédiaire de ladite buse.

11. Procédé de fourniture de chaleur dans un appareil de dépôt laser, ledit procédé comprenant les étapes suivantes :
fourniture d'une source de lumière laser (14);
fourniture d'un élément optique (20) pour moduler la lumière laser afin de produire un faisceau (22);
fourniture de moyens pour traverser le faisceau au-dessus d'un substrat (24) utilisé dans une direction prédéterminée (V), le faisceau ayant un bord d'attaque (34) et un bord de fuite (38) définis par référence à la direction transversale et présentant des bord transversaux rejoignant les bords d'attaque et de fuite, la distribution d'intensité du faisceau (30) sur sa surface de section transversale étant définie pour fournir une distribution de la température souhaitée à utiliser dans le substrat;
de sorte que le procédé, en modulant de la lumière laser avec l'élément optique pour produire un faisceau ayant la distribution d'intensité définie, veille à ce que l'intensité du faisceau soit plus élevée au niveau des bords transversaux du faisceau qu'au centre dudit faisceau, à une position donnée entre les bords d'attaque et de fuite.
